**Europäisches Patentamt**

**European Patent Office**

**Office européen des brevets**

(19)

(11) Numéro de publication : **0 629 880 A1**

# (12) DEMANDE DE BREVET EUROPEEN

(21) Numéro de dépôt : **94401292.1**

(22) Date de dépôt : **09.06.94**

(51) Int. Cl.⁵ : **G01S 17/36**

(30) Priorité : **10.06.93 FR 9306971**

(43) Date de publication de la demande :
**21.12.94 Bulletin 94/51**

(84) Etats contractants désignés :
**AT BE CH DE DK ES FR GB GR IE IT LI LU MC NL PT SE**

(71) Demandeur : **BERTIN & CIE**
**BP no. 3**
**F-78373 Plaisir Cedex (FR)**

(72) Inventeur : **Abitbol, Marc**
**BP 23**
**F-13382 Marseille (FR)**

Inventeur : **Leblay, Pierrick**
**5, allée de Gascogne,**
**Hameau des Logissons**
**F-13770 Venelle (FR)**
Inventeur : **Debrie, Jean**
**28, avenue du Colonel Schuler,**
**La Reynarde Bat. B**
**F-13100 Aix en Provence (FR)**
Inventeur : **Lequime, Michel**
**6, rue des Sauries**
**F-13510 Eguilles (FR)**
Inventeur : **Millet, Jocelyn**
**1121, rue Léon Arnoux**
**F-84120 Pertuis (FR)**

(74) Mandataire : **Ramey, Daniel et al**
**Cabinet Ores**
**6 Avenue de Messine**
**F-75008 Paris (FR)**

(54) **Télémètre.**

(57) Télémètre, comprenant une source lumineuse telle qu'une diode laser associée à une optique de collimation (12) pour l'émission d'un faisceau lumineux (14) en direction d'une cible (16), des moyens (18) de modulation de l'intensité du faisceau émis (14) à deux fréquences différentes dont le rapport est une puissance de 2, des moyens (20, 22, 24) de réception du flux lumineux rétrodiffusé par la cible (16), et des moyens (18) de mesure simultanée des déphasages entre le faisceau émis et le flux reçu aux deux fréquences précitées et de calcul de la distance de la cible à partir de ces deux déphasages.

FIG.1

EP 0 629 880 A1

L'invention concerne un télémètre, du type dans lequel la distance d'une cible est déterminée à partir du déphasage entre un signal périodique émis vers la cible et le signal rétrodiffusé par la cible.

Dans ce type de télémètre, on module à haute fréquence l'intensité du faisceau lumineux émis par une diode laser. Dans le cas d'un imageur laser, le faisceau modulé est transmis par une lentille de collimation à des moyens de déviation angulaire qui permettent de réaliser un balayage d'une zone d'espace. Le flux lumineux rétrodiffusé est capté par un photorécepteur relié à un phasemètre et à des moyens de calcul pour déterminer le déphasage entre le faisceau émis et le flux capté et en déduire les distances des points rétrodiffusants de la zone d'espace observée.

Les distances qui sont ainsi calculées peuvent être transformées en nuances de gris ou en fausses couleurs conformément à un code prédéterminé, pour la visualisation d'une image télémétrique ou image de "distances" de la zone d'espace observée.

Pour éviter de travailler sur des durées extrêmement faibles inférieures à la nanoseconde (cas des télémètres à mesure impulsionnelle) quand on recherche une bonne précision sur la mesure de distance, la mesure du déphasage entre le signal émis et le signal reçu est faite, non pas à la haute fréquence de modulation, mais à une fréquence intermédiaire beaucoup plus faible, le passage à cette fréquence intermédiaire se faisant par des techniques d'hétérodynage bien connues de l'homme du métier.

L'inconvénient essentiel de ces télémètres réside dans leur très faible portée de mesure, due au fait que l'on ne sait pas mesurer la valeur totale du déphasage entre le signal émis et le signal reçu, et que l'on peut obtenir uniquement sa valeur modulo $2\pi$. Si l'on utilise par exemple une fréquence de modulation de 50 MHz, le trajet aller-retour de la lumière entre le télémètre et une cible correspondant à un déphasage de $2\pi$ est de l'ordre de 6 mètres, soit une portée utile de mesure de 3 mètres.

On pourrait augmenter cette portée en diminuant la fréquence de modulation, mais cela se ferait au détriment de la précision sur la mesure.

Le fait que le rapport signal/bruit du flux rétrodiffusé capté au niveau du télémètre soit très faible et varie avec la distance de la cible, renforce encore les difficultés.

Pour réduire cet inconvénient, on a déjà proposé de superposer des faisceaux lumineux modulés à des fréquences différentes dont l'une (la fréquence basse) détermine la portée et l'autre (la fréquence haute) fournit la précision voulue sur la mesure de la distance (voir par exemple Instruments and Control Systems, Avril 1971, "Dual-Frequency Laser Ranging", pages 117 et 118).

La précision sur la mesure de distance est nettement améliorée, pour une portée relativement étendue, mais le calcul de la distance à partir des mesures des déphasages devient alors relativement long, ce qui interdit d'utiliser les télémètres connus de ce type dans de nombreuses applications telles notamment que les robots mobiles à grande vitesse de déplacement et les robots susceptibles d'évoluer à l'extérieur, ainsi que dans toutes les applications nécessitant des mesures rapides et précises de distance au-delà de quelques mètres environ.

L'invention a pour objet un télémètre qui ne soit pas soumis à ces inconvénients.

L'invention a également pour objet un télémètre du type précité, ayant une portée très supérieure à celle des dispositifs concurrents connus et capable de mesurer avec précision et une très grande rapidité toute distance comprise entre une valeur sensiblement nulle et la portée maximale.

L'invention a encore pour objet un télémètre de ce type, qui puisse fournir des images contenant en chaque point des informations de distance d'une zone observée, à une cadence élevée proche de la cadence vidéo.

Elle propose à cet effet un télémètre comprenant au moins une source lumineuse telle qu'une diode laser, un objectif de collimation associé à la source pour l'émission d'un faisceau lumineux en direction d'une cible, des moyens de modulation périodique de l'intensité du faisceau émis à deux fréquences différentes, des moyens de réception d'un flux lumineux rétrodiffusé par la cible, des moyens de mesure des déphasages entre le faisceau émis et le flux reçu aux deux fréquences précitées, et des moyens de calcul pour en déduire la distance de la cible, caractérisé en ce que le rapport des deux fréquences de modulation est une puissance de 2 et en ce que les moyens de mesure de déphasage et de calcul sont du type numérique câblé permettant la mesure simultanée en temps réel des déphasages aux deux fréquences précitées et le calcul en temps réel de la distance de la cible.

Les circuits précités du type câblé sont par exemple des circuits EPLD (Erasable Programable Logical Devices).

Les deux fréquences de modulation du faisceau émis vers la cible sont choisies en fonction de la portée maximale et de la précision que l'on souhaite obtenir. Par mesure des déphasages aux deux fréquences précitées, on obtient la valeur réelle du déphasage correspondant à la distance aller-retour entre le télémètre et la cible, et non pas seulement sa valeur modulo $2\pi$, la mesure du déphasage à la fréquence la plus faible permettant de lever l'indétermination d'un multiple de $2\pi$ sur la mesure du déphasage à la fréquence la plus élevée.

La portée maximale du télémètre est sensiblement égale à la moitié de la longueur d'onde correspondant à la fréquence de modulation la plus faible.

Le fait que le rapport des deux fréquences de modulation soit égal à une puissance de 2, permet d'effectuer les calculs de distance en utilisant un très petit nombre d'opérations simples et rapides, ne nécessitant que quelques cycles d'horloge. Typiquement, un calcul de distance à partir des mesures de phase prend de 10 à 15 nanosecondes. Cela permet une cadence de mesure de distances égale à la fréquence de modulation la plus faible.

De préférence, les fréquences de modulation sont synchrones ou verrouillées en phase, c'est-à-dire que leurs variations sinusoïdales repassent par zéro à des instants simultanés (plus exactement, le passage par zéro du signal sinusoïdal ayant la fréquence la plus faible doit s'effectuer en même temps que le passage par zéro du signal sinusoïdal ayant la fréquence la plus élevée) ou bien que la différence entre la phase du signal de fréquence faible et de la phase modulo $2\pi$ du signal de fréquence élevée est une constante.

En fonction des applications de l'invention, le rapport de ces fréquences peut être compris entre 2 et 1024, et par exemple est de 8 ou 16.

Selon une autre caractéristique de l'invention, les moyens de réception comprennent un photorécepteur, un circuit de séparation de fréquences reliant la sortie du photorécepteur à deux voies parallèles de traitement recevant également en entrée des signaux sinusoïdaux de référence ayant des fréquences égales aux fréquences de modulation précitées, ces deux voies comprenant chacune un double circuit hétérodyne de passage à une même fréquence intermédiaire et un double circuit numérique de comptage d'impulsions, les sorties de ces deux voies étant reliées aux entrées d'un circuit de calcul.

Ainsi, on peut mesurer simultanément et en temps réel les déphasages des signaux émis et reçus, la mesure étant faite à une même fréquence intermédiaire, très inférieure aux fréquences de modulation, ce qui permet aussi de calculer la distance en temps réel à l'aide d'un circuit câblé, par exemple du type EPLD comme précité.

Dans une forme de réalisation de l'invention, le télémètre comprend une seule diode laser et des moyens de commande et d'alimentation de cette diode permettant de moduler le faisceau émis simultanément aux deux fréquences précitées, la modulation à la fréquence la plus faible servant de porteuse à la modulation à la fréquence la plus élevée.

En variante et pour augmenter la dynamique de modulation, le télémètre selon l'invention comprend deux diodes laser émettant chacune un faisceau lumineux, des moyens de modulation d'un de ces faisceaux à l'une des fréquences précitées, des moyens de modulation de l'autre de ces faisceaux à l'autre fréquence précitée, et des moyens de multiplexage optique par polarisation des deux faisceaux modulés.

Selon une autre caractéristique de l'invention, le photorécepteur recevant le flux rétrodiffusé par la cible est à petite surface sensible, dont l'aire correspond sensiblement à celle de la tache formée par le flux rétrodiffusé quand la cible est sensiblement à la distance maximale de mesure.

On réduit ainsi la dynamique de mesure liée à la distance de la cible, ce qui permet de fournir sensiblement la même précision pour toute distance comprise entre une valeur nulle et la portée maximale du télémètre.

Selon une autre caractéristique de l'invention, le télémètre comprend des moyens de déviation angulaire périodique du faisceau émis, permettant un balayage par lignes d'un champ d'observation, ces moyens comprenant par exemple des miroirs pivotants à commande galvanométrique asservie et pilotée. Le télémètre permet alors le balayage d'une zone d'espace et l'obtention d'images télémétriques de cette zone d'espace à cadence relativement rapide, de l'ordre de la cadence vidéo, ceci étant rendu possible par la rapidité du calcul des distances.

Selon encore une autre caractéristique de l'invention, le télémètre comprend une pluralité de fibres optiques dont les premières extrémités sont situées dans le champ d'observation précité au voisinage des moyens de déviation angulaire, et dont les secondes extrémités ont des orientations et une répartition prédéterminées par rapport au télémètre.

Cela permet par exemple de détecter des obstacles plus ou moins proches situés en dehors du champ d'observation, ce qui est particulièrement intéressant pour réaliser une "ceinture anti-collision à fibres optiques" lorsque le télémètre est embarqué dans un engin mobile tel qu'un véhicule ou un robot.

Enfin, le télémètre peut comprendre également des moyens de traitement des signaux de sortie du photorécepteur, reliés à des moyens de visualisation pour l'obtention d'une image de la réflectance de la zone observée. On peut ainsi obtenir simultanément une image de réflectance, analogue à une image vidéo, de la zone observée en plus d'une image télémétrique de cette zone.

Le télémètre selon l'invention a des applications particulièrement nombreuses, par exemple :
- en robotique mobile, pour la perception et la navigation tridimensionnelles, la détection et l'évitement d'obstacles, le suivi de terrain (suspensions actives),
- dans l'industrie, pour les relevés d'objets ou d'ouvrages tels que construits, la visualisation tridimensionnelle pour la télé-opération ou la télé-manipulation, le contrôle dimensionnel en ligne de produits même chauds (à 900°C par exemple), les systèmes d'accostage automatique,
- la télémétrie rapide, les relevés tridimensionnels de terrain, les systèmes auto-directeurs, etc.

L'invention sera mieux comprise et d'autres caractéristiques, détails et avantages de celle-ci apparaitront plus clairement à la lecture de la description qui suit, faite à titre d'exemple en référence aux dessins annexés dans lesquels :

la figure 1 représente schématiquement, sous forme de schémas-blocs, les moyens essentiels d'un télémètre selon l'invention;

les figures 2a, 2b, 3a et 3b sont des graphes illustrant le principe de mesure à distance mis en oeuvre dans le télémètre selon l'invention;

la figure 4 représente schématiquement les circuits électroniques de commande et de mesure;

la figure 4a est un diagramme synoptique des opérations de calcul de distance;

la figure 5 représente schématiquement une variante de réalisation du télémètre;

la figure 6 représente schématiquement une partie d'un télémètre à balayage;

la figure 7 représente schématiquement un robot mobile équipé d'un télémètre selon l'invention;

la figure 8 représente schématiquement le champ d'observation du robot de la figure 7.

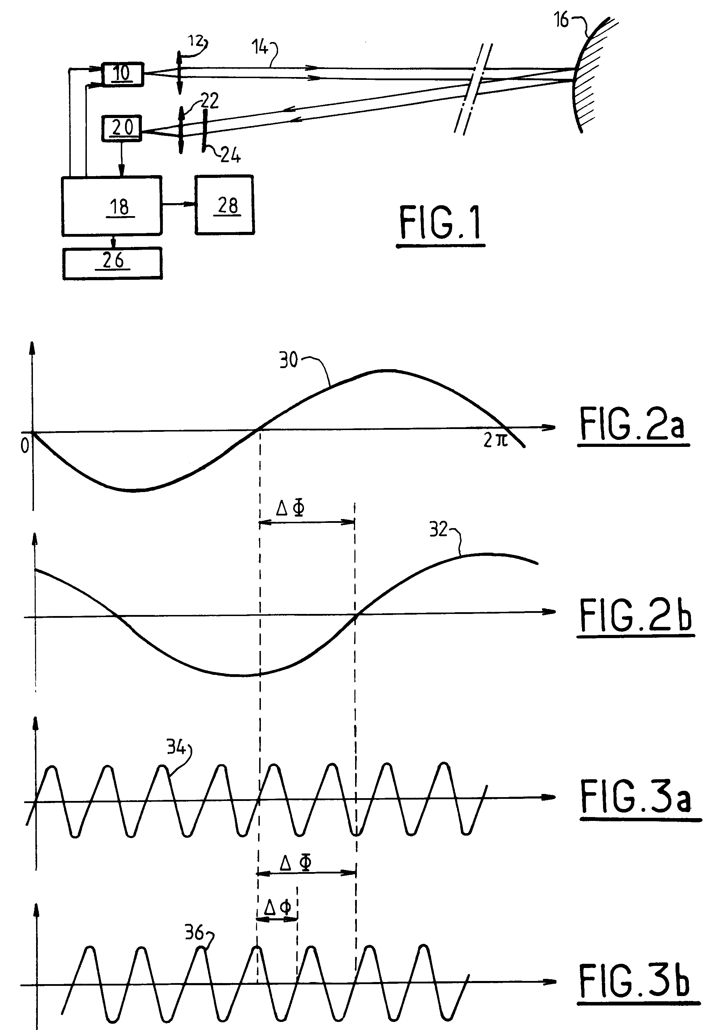

On se réfère d'abord à la figure 1, qui représente les composants essentiels d'un télémètre selon l'invention.

Ce télémètre comprend une source lumineuse telle qu'une diode laser 10, associée à une lentille ou un objectif 12 de collimation pour émettre un faisceau lumineux 14 en direction d'une cible 16 située à une distance quelconque du télémètre comprise entre une valeur nulle et la portée maximale de mesure du télémètre.

La diode laser 10 est alimentée et commandée par un ensemble 18 de circuits électroniques, qui permettent de moduler l'intensité du faisceau émis 14 à deux fréquences différentes dont la plus basse détermine la portée maximale du télémètre et dont la plus élevée détermine la précision de la mesure.

Le télémètre comprend également un photorécepteur 20 associé à une lentille de focalisation 22 et à un filtre interférentiel 24 pour recevoir le flux lumineux rétrodiffusé par la cible 16. La sortie du photorécepteur 20 est reliée à une entrée de l'ensemble de circuits électroniques 18, dont les sorties peuvent être reliées à des moyens 26 d'enregistrement et à des moyens 28 d'utilisation ou d'application des mesures de distance réalisées, par exemple des moyens de commande de propulsion ou de direction, des moyens de visualisation, etc.

Les deux fréquences de modulation de l'intensité du faisceaux lumineux 14 émis par la diode laser 10 sont de préférence obtenues par division par 2 d'une même fréquence, et leur rapport est une puissance de 2.

Le principe de base du télémètre selon l'invention va maintenant être décrit en référence aux figures 2a à 3b.

Les figures 2a et 2b représentent chacune un signal sinusoïdal de fréquence F, le signal 30 de la figure 2a correspondant par exemple à la modulation à la fréquence F de l'intensité du faisceau 14 émis en direction de la cible 16, tandis que le signal 32 de la figure 2b correspond au flux lumineux rétrodiffusé par la cible 16 et reçu par le photorécepteur 20, ce signal 32 ayant par rapport au signal 30 un déphasage $\Delta\Phi$ inférieur à $2\pi$ et qui correspond au trajet aller-retour de la lumière entre le télémètre et la cible, c'est-à-dire entre la diode laser 10 et le photorécepteur 20.

Les figures 3a et 3b représentent des signaux sinusoïdaux 34 et 36 ayant une fréquence f égale au produit d'une puissance de 2 et de la fréquence F précitée, le signal 34 de la figure 3a représentant la modulation à la fréquence f de l'intensité du faisceau 14 émis vers la cible 16, tandis que le signal 36 de la figure 3b représente la modulation à cette même fréquence du flux rétrodiffusé par la cible 16 et reçu par le photorécepteur 20. Les signaux de modulation aux fréquences f et F sont synchrones ou verrouillés en phase, le signal 30 passant par zéro (ou par une valeur moyenne) à des instants où le signal 34 passe lui-même par zéro (ou par une valeur moyenne). Le déphasage réel des signaux 34 et 36 correspond au trajet aller-retour de la lumière entre le télémètre et la cible et est bien entendu égal au déphasage $\Delta\Phi$ entre les signaux 30 et 32 à la fréquence F lorsque la cible est à la même distance dans les deux cas.

Ce déphasage des signaux 34 et 36 peut s'écrire

$$\Delta\Phi = \Delta\phi + 2 k \pi$$

où : $\Delta\phi$ est le déphasage modulo $2\pi$ des signaux 34 et 36 k est un nombre entier supérieur ou égal à 0.

Dans l'exemple représenté aux figures 3a et 3b, k est égal à 1, le rapport des fréquences étant égal à 8.

La distance D entre le télémètre et la cible est donnée par les formules suivantes :

$$\Delta\Phi = 4\pi \, F \, D/c$$
$$\Delta\phi + 2k\pi = 4\pi \, f \, D/c$$

où : c est la vitesse de la lumière.

$\Delta\Phi$ et $\Delta\phi$ étant mesurés, on obtient les valeurs de k et D par les formules suivantes :

$$k = \text{partie entière de } \left[ \frac{1}{2\pi} \left( \Delta\Phi \cdot \frac{f}{F} - \Delta\phi \right) \right]$$

$$D = \frac{c}{2f} \left[ \frac{\Delta\phi}{2\pi} + k \right]$$

Si l'on veut éviter une indétermination d'une multiple de $2\pi$ sur la mesure du déphasage $\Delta\Phi$ entre les signaux 30 et 32 à la fréquence de modulation F la plus faible, il faut que la distance de la cible reste inférieure à la demi-longueur d'onde correspondant à la fréquence F, cette demi-longueur d'onde définissant donc la portée maximale du télémètre. Par exemple, si la fréquence F est de 1MHz, la portée maximale du télémètre est d'environ 150 mètres.

Si la fréquence f est alors de 16 MHz, on peut obtenir une précision de l'ordre de 10 centimètres sur la mesure d'une distance comprise entre 0 et 150 mètres.

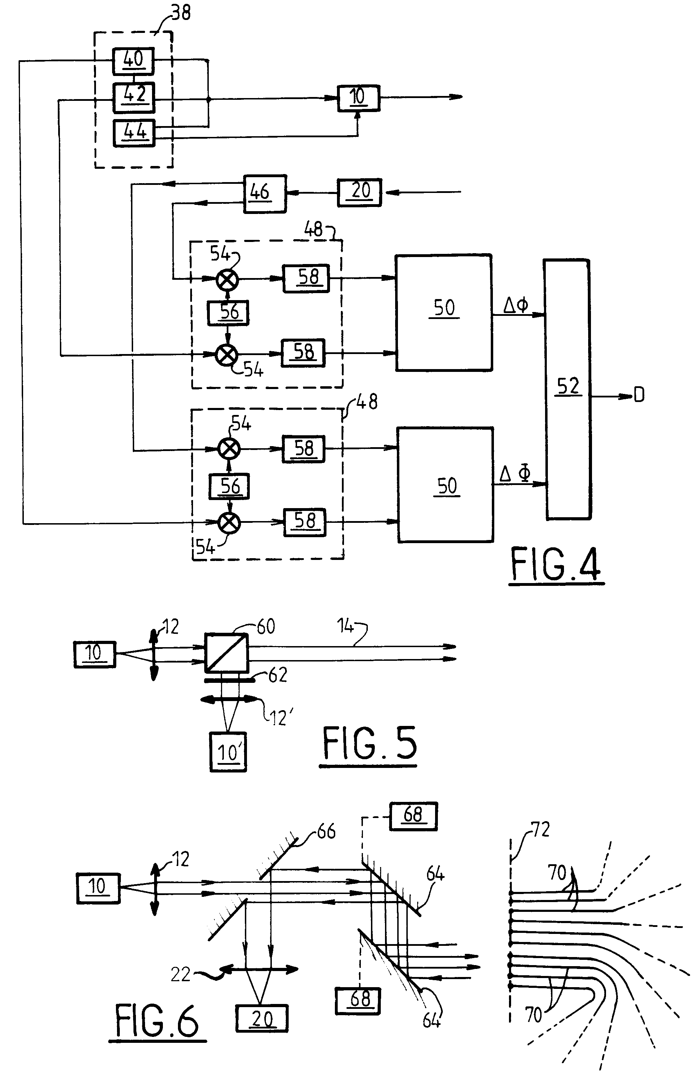

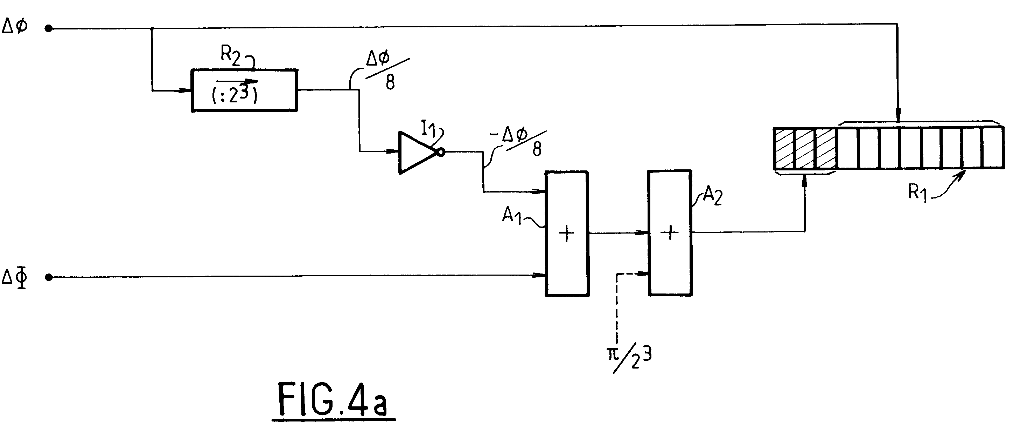

On a représenté en figure 4 des circuits de mise en oeuvre de ce principe de mesure.

Ces circuits comprennent un module d'émission 38 pour l'alimentation et la commande de la diode laser 10, ce module 38 comprenant des moyens 40 et 42 générant les fréquences F et f respectivement, et des moyens 44 de polarisation de la diode laser 10. Les moyens de génération des fréquences F et f comprennent de préférence un oscillateur haute fréquence, associé à des diviseurs par deux.

L'intensité du faisceau lumineux 14 émis par la diode laser 10 est ainsi modulée à la fréquence F, et cette modulation est elle-même soumise à une modulation à la fréquence f, la première modulation à la fréquence F servant de porteuse à la modulation à la fréquence f.

Le photorécepteur 20 sur lequel est focalisé le flux lumineux rétrodiffusé par la cible est relié à un séparateur de fréquences 46 dont les deux sorties sont connectées à deux voies parallèles de traitement, l'une recevant des signaux de fréquence F et l'autre des signaux de fréquence f. Chaque voie de traitement comprend successivement un module 48 de passage à une fréquence intermédiaire et un circuit numérique câblé 50 de mesure de déphasage, aboutissant à un circuit câblé 52 de calcul, commun aux deux voies de traitement.

Chaque module 48 de changement de fréquence comprend lui-même deux voies identiques dont l'une reçoit un signal de sortie du séparateur 46 et dont l'autre reçoit un signal de référence à la même fréquence, fourni par les moyens 40 ou 42 correspondants de génération de fréquence. Chaque voie d'un module 48 comprend un mélangeur 54 dont une entrée reçoit un signal à la fréquence F ou f et dont l'autre entrée reçoit un signal de fréquence F' ou f' fourni par un oscillateur local 56, le mélangeur 54 fournissant en sortie un signal de battement à la fréquence F-F' ou f-f' respectivement, qui est appliqué à une entrée du circuit 50 de mesure de phase par l'intermédiaire d'un filtre passe-bande 58 accordé sur la fréquence de battement. Les fréquences F' et f' des oscillateurs 56 sont déterminées pour que les fréquences de battement F-F' et f-f' soient égales à une même fréquence intermédiaire, par exemple de 400kHz.

Ce passage des fréquences de modulation à la fréquence intermédiaire ne modifie pas les déphasages entre les signaux de référence et les signaux de sortie du photorécepteur, de sorte que l'on retrouve les mêmes déphasages entre voies à l'entrée et à la sortie d'un module 48.

Chaque circuit 50 de mesure de déphasage est du type à comptage d'impulsions d'horloge à haute fréquence, le comptage commençant à l'ouverture d'une porte, déclenchée par le passage par 0 du signal appliqué à l'une des entrées du circuit 50, et s'arrêtant à la fermeture de la porte, commandée par le passage par 0 du signal appliqué à l'autre entrée du circuit 50.

Lorsque la fréquence intermédiaire est de 400 kHz comme indiqué plus haut, la fréquence des impulsions d'horloge peut être de 100 Mhz, de sorte qu'un déphasage de $2\pi$ à cette fréquence intermédiaire corresponde à 256 impulsions, c'est-à-dire à une numérisation sur huit bits.

Les circuits 50 de mesure de déphasage fournissent donc en sortie des valeurs numériques des déphasages précités $\Delta\phi$ et $\Delta\Phi$ respectivement, qui sont appliquées aux entrées du circuit de calcul 52 dont la sortie fournit la valeur numérique de la distance D de la cible.

Le fait que les signaux de fréquence F et f fournis par les générateurs 40 et 42 soient "synchrones" ou "en phase" permet de mesurer les déphasages $\Delta\phi$ et $\Delta\Phi$ simultanément et en temps réel, et de calculer une distance D en temps réel à partir des valeurs de ces déphasages. Le circuit 52 de calcul peut donc être un circuit logique câblé, par opposition à un circuit de traitement de données, dans lequel le calcul d'une valeur nécessite le déroulement d'un programme.

La fréquence de calcul de distance est alors égale à la fréquence intermédiaire précitée, soit 400 kHz dans le cas indiqué plus haut.

La figure 4 a est un diagramme synoptique des opérations de calcul réalisées selon l'invention sur les mesures de phase pour obtenir les distances.

De façon générale, le calcul de la distance D nécessite le calcul du nombre entier k cité plus haut et sa combinaison à la mesure du déphasage (modulo $2\pi$) pour le signal de fréquence élevée. Lorsque le rapport des deux fréquences de modulation est de 8, soit ($2^3$), le déphasage $\Delta\phi$ à la fréquence élevée, exprimé sous forme d'un mot de 8 bits, est d'une part fourni directement à un registre R1 pour donner les 8 bits de rang le plus faible de la distance D et est d'autre part divisé par 8, cette division s'effectuant simplement par un décalage des bits de trois rangs vers la droite réalisé en R2, le résultat de cette division étant soustrait du mot de 8 bits exprimant le déphasage $\Delta\Phi$ à la fréquence faible. Cette soustraction est réalisée en I1 en obtenant le complément à 2 du résultat de la division, et en ajoutant ce complément $-\Delta\phi/8$ à $\Delta\Phi$ en A1, le résultat de l'addition permettant d'obtenir une valeur approchée du nombre k précité. On prend ensuite les trois bits de rang le plus élevé du mot exprimant k et on les introduit dans le registre R1 où ils constituent les trois bits de rang le plus élevé d'un mot de 11 bits exprimant la distance D, les 8 bits de rang faible de ce mot étant les 8 bits du mot exprimant le déphasage $\Delta\phi$ à la fréquence élevée.

On voit que le calcul D ne nécessite que 4 opérations simples et rapides.

Pour éviter ou minimiser l'influence du bruit sur la mesure de $\Delta\phi$ au voisinage de la transition $(2\pi\text{-O})$, on peut introduire un déphasage fixe $\pi/8$ (ou $\pi/2^n$, $2^n$ étant le rapport des fréquences de modulation) exprimé par un bit que l'on ajoute en A2 à la suite des 3 bits de rang élevé du mot "k".

De façon générale, si le rapport des fréquences de modulation est $2^n$, on divise le déphasage $\Delta\phi$ à la fréquence élevée par $2^n$ (décalage de n rangs vers la droite), on prend le complément à 2, on ajoute à $\Delta\Phi$, on garde les n bits de rang le plus élevé et on les place devant les 8 bits de $\Delta\phi$ pour obtenir la distance D.

Par ailleurs, comme l'amplification poussée de signaux faibles produit en général un déphasage, l'invention prévoit de compenser ce déphasage au moyen d'une table de valeurs de correction enregistrée en mémoire des moyens de calcul 52, ces valeurs de correction étant obtenues préalablement par étalonnage (mesure de la fonction de transfert en phase de la chaîne d'amplification en fonction de l'amplitude du signal à l'entrée).

Dans ce qui vient d'être décrit, une seule diode laser est utilisée pour produire le faisceau lumineux d'émission dont l'intensité est modulée aux fréquences F et f simultanément.

En variante, comme représenté en figure 5, on peut utiliser deux diodes laser identiques 10 et 10' dont l'une fournit une faisceau dont l'intensité est modulée à la fréquence F et dont l'autre fournit un faisceau dont l'intensité est modulée à la fréquence f, ces deux faisceaux étant collimatés par des objectifs 12 et 12' puis multiplexés optiquement par l'intermédiaire d'un cube 60 séparateur de polarisation et d'une lame demi-onde 62 placée sur le trajet de l'un des faisceaux. Le faisceau unique 14 sortant du cube 60 est analogue au faisceau 14 d'émission obtenu dans l'exemple précédemment décrit où l'on utilise une seule diode laser.

Dans le mode de réalisation représenté schématiquement en figure 6, le télémètre comprend des moyens de déviation angulaire du faisceau émis par la diode laser, pour le balayage d'une zone d'espace déterminée. De façon classique, ces moyens de balayage peuvent comprendre deux miroirs pivotants 64 dont les axes de pivotement sont perpendiculaires pour balayer la zone d'espace observée par des lignes parallèles sensiblement équidistantes.

Selon l'invention, le flux rétrodiffusé par la zone d'espace observée et capté par le télémètre est colinéaire ou coaxial au faisceau lumineux émis et repasse par les miroirs de balayage 64. Pour cela, on place sur le trajet du faisceau émis 14, entre la lentille de collimation 12 et les miroirs de balayage 64, un réflecteur 66 qui présente un orifice central de passage du faisceau émis 14 et qui est incliné sur l'axe de ce faisceau pour capter le flux rétrodiffusé renvoyé par les miroirs de balayage 64 et le diriger vers la lentille de focalisation 22 associée au photorécepteur 20. Un diaphragme réglable peut être interposé entre le réflecteur 66 et l'objectif de focalisation 22 pour modifier la dimension utile de la pupille de ce système optique. Une faible valeur du diamètre de cette pupille permet en effet d'utiliser des miroirs de balayage 64 de très faible inertie, à commande galvanométrique programmable asservie et pilotée de haute performance. On peut ainsi avoir une fréquence de balayage ligne de l'ordre de 1 kHz ou davantage, pour l'obtention d'une fréquence image de l'ordre de 10 Hz ou davantage.

En variante, les moyens de balayage peuvent être à commande piézoélectrique lorsque les mouvements de balayage doivent être plus rapides et d'amplitude relativement faible.

Par ailleurs, on utilise également un photorécepteur 20 à petite surface sensible, dont l'aire est sensiblement égale au diamètre de la tache lumineuse formée sur ce photorécepteur par le flux rétrodiffusé par une cible située au voisinage de la distance maximale de mesure, ce qui permet de limiter une dynamique élevée de mesure liée aux variations de distance de la cible (cette dynamique étant fonction du carré de la distance), et de limiter l'influence de la lumière parasite.

De façon avantageuse, les moyens 68 de commande de déplacement des miroirs de balayage 64 sont indépendamment réglables et programmables, notamment pour modifier les dimensions du champ d'observation, modifier le nombre de lignes de balayage de ce champ d'observation et permettre des effets de zoom hors de l'axe optique. Par exemple, les dimensions du champ d'observation peuvent varier de 5°x5° à 50°x50° environ.

Il peut également être particulièrement avantageux d'associer à ce télémètre une pluralité de fibres optiques 70 dont des premières extrémités sont regroupées au voisinage des moyens de balayage du faisceau émis et dont les autres extrémités ont des orientations et une répartition prédéterminées autour du télémètre.

En particulier, les premières extrémités des fibres optiques 70 peuvent être regroupées en toron ou disposées le long d'une même ligne de balayage 72.

De façon classique, des optiques de focalisation sont associées aux extrémités des fibres et définissent notamment les champs de détection aux secondes extrémités de ces fibres.

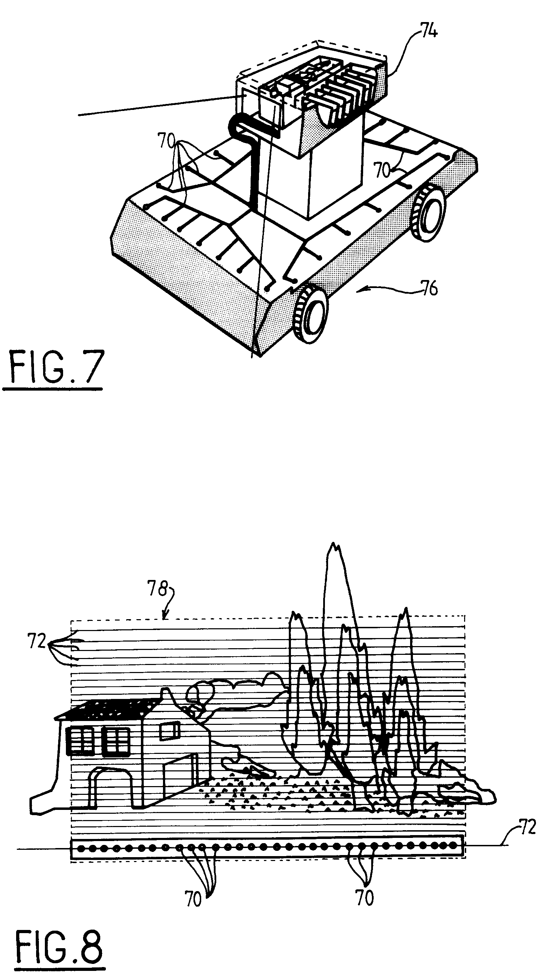

Lorsque le télémètre 74 est embarqué à bord d'un engin mobile 76 comme représenté schématiquement en figure 7, le champ d'observation du télémètre peut être orienté de façon permanente vers l'avant de cet engin, tandis que les secondes extrémités des fibres optiques 70 sont réparties tout autour du télémètre et orientées dans des directions différentes, pour permettre une détection périphérique d'obstacles, d'accidents de terrain, etc.

Le champ d'observation du télémètre 74, représenté en figure 8 et désigné par la référence 78 comprend alors un certain nombre de lignes horizontales de balayage 72, dont la plus basse est au niveau des premières extrémités des fibres optiques 70. On peut en fonction des conditions de déplacement de l'engin mobile 76, balayer tout ou partie du champ d'observation 78, en y incluant ou non la rangée de fibres optiques 70, et en réduisant ou en augmentant les dimensions verticales et horizontales du champ d'observation.

De façon générale, cela permet de réaliser une perception tridimensionnelle de l'environnement, un gyrotélémètre de surveillance périphérique, ou une ceinture anti-collision à fibres optiques.

Dans certaines applications, il est intéressant ou avantageux de disposer d'une image "réflectance" de type vidéo d'une zone d'espace, en même temps que de l'image télémètrique de cette zone. On peut obtenir cette image vidéo à partir du signal de sortie du photorécepteur, dont l'intensité correspond aux réflectances des points de la zone observée. L'image vidéo ou l'image de réflectance ainsi obtenue est indépendante de l'éclairage ambiant, ce qui peut être très utile dans certains cas.

Dans d'autres applications, le dispositif selon l'invention peut être utilisé en imagerie "passive", la diode laser étant éteinte et les moyens de balayage fonctionnant normalement pour fournir l'image d'une scène comportant des points ou des objets lumineux ou brillants. Cela permet d'obtenir une image "passive" de la scène, qui vient s'ajouter aux images de "distances" et de "réflectances" que l'on peut obtenir en procédant comme indiqué plus haut. Cette technique est intéressante notamment en robotique pour le suivi de joint ou de cordon de soudure.

Par ailleurs, on peut être amené à modifier les gains des moyens de traitement du signal de sortie du photorécepteur, pour tenir compte des albédos des points de la zone observée, qui peuvent être très variables (0,02 pour le goudron, 0,3 pour la peau, 1 pour le plâtre et 10.000 pour une matière réfléchissante) et éviter ainsi la saturation des moyens de traitement. On prévoit donc des moyens de contrôle dynamique des gains, permettant par exemple d'alterner une image à gains normaux avec une image à gains réduits, ou d'alterner dans une même image des lignes de balayage à gain fort avec des lignes de balayage à gain faible.

Les fibres optiques utilisées pour la liaison aux moyens de balayage ont des extrémités d'entrée et de sortie traitées anti-reflets ou dont les faces sont inclinées par rapport à la normale pour éviter les réflexions parasites. Pour la même raison, les fibres optiques seront de préférence séparées pour les trajets aller et retour.

Des fibres optiques peuvent également être utilisées en association avec des lentilles appropriées, pour relier la source 10 à la lentille 12 et la lentille 22 au récepteur 20, ces liaisons pouvant avoir une longueur quelconque, par exemple entre 10 et 100 m, pouvant atteindre 1.000 m, ce qui se révèle intéressant quand le système optique (12, 22, 64) est placé dans un environnement dangereux.

Dans des applications particulières de l'invention, par exemple de "détection d'optique pointée" où il faut repérer des lunettes de visée ou des jumelles orientées vers un site à protéger, il peut être nécessaire de couvrir un champ important à cadence élevée, par exemple de 360° x 15° en une seconde. Dans ce cas, l'invention prévoit d'utiliser, à la place d'un photorécepteur unique, une barrette 20 de photodétecteurs, tels que des photodiodes à avalanche, comportant par exemple de 32 à 64 pixels ou photodétecteurs élémentaires (ces composants étant actuellement disponibles). Il faut alors également éclairer le champ à observer avec la diode laser d'émission, ce qui est réalisable à l'aide d'optiques cylindriques adaptées. Pour conserver un bilan de flux approprié, on sera amené à utiliser des diodes laser plus puissantes que dans les applications précédemment décrites, ou des pupilles optiques plus grandes.

Par exemple, l'ensemble constitué par la diode laser 10, la barrette 20 de photodétecteurs, leurs optiques associées et les moyens de balayage est monté à rotation autour d'un axe vertical pour couvrir un champ de 360° et est associé à des moyens moteurs d'entraînement en rotation autour de cet axe. Dans ce cas, les moyens de balayage réalisent une déviation angulaire rapide du faisceau émis dans un plan sensiblement vertical (en fait, légèrement incliné par rapport à la verticale en fonction de la vitesse de rotation de l'ensemble précité) sur 15° par exemple, ou davantage en fonction des conditions d'utilisation. Les signaux de sortie des photodétecteurs de la barrette sont traités en parallèle, par des moyens ou circuits du même type que ceux décrits dans ce qui précède. On peut ainsi obtenir des cadences très élevées de mesure de distance, par exemple de 5 à 10 MHz.

Par ailleurs, la rapidité des calculs de distance permet d'effectuer un grand nombre de mesures et d'en prendre la moyenne. Par exemple 10.000 mesures d'une distance permettent d'augmenter la précision d'un facteur 100 sur la mesure de cette distance et d'obtenir cette mesure en un temps de calcul d'environ 0,15 ms.

**Revendications**

1.  Télémètre, comprenant au moins une source lumineuse (10) telle qu'une diode laser, une optique (12) de collimation associée à la source pour l'émission d'un faisceau lumineux (14) en direction d'une cible (16), des moyens (18) de modulation périodique de l'intensité du faisceau émis à deux fréquences différentes, des moyens (20) de réception d'un flux lumineux rétrodiffusé par la cible, des moyens (18) de mesure des déphasages entre le faisceau émis et le flux reçu aux deux fréquences précitées, et des moyens de calcul pour en déduire la distance de la cible, caractérisé en ce que le rapport des deux fréquences de modulation est une puissance de 2 et en ce que les moyens (18) de mesure de déphasage et de calcul sont du type numérique câblé permettant la mesure simultanée en temps réel des déphasages aux deux fréquences précitées et le calcul en temps réel de la distance de la cible (16).

2. Télémètre selon la revendication 1, caractérisé en ce que sa portée maximale est sensiblement égale à la moitié de la longueur d'onde correspondant à la fréquence de modulation la plus faible.

3. Télémètre selon la revendication 1 ou 2, caractérisé en ce que le rapport des deux fréquences de modulation est compris entre 2 et 1024 et est par exemple de 8 ou 16.

4. Télémètre selon l'une des revendications précédentes, caractérisé en ce que les moyens de réception comprennent des moyens hétérodynes (48) de changement de fréquence, ramenant à une même fréquence intermédiaire les signaux correspondant aux faisceaux émis et aux flux reçus, sans modifier leur déphasage.

5. Télémètre selon l'une des revendications précédentes, caractérisé en ce que les moyens de réception comprennent un photorécepteur (20), un circuit (46) de séparation de fréquences reliant la sortie du photorécepteur à deux voies parallèles de traitement recevant également en entrée des signaux sinusoïdaux de référence ayant des fréquences égales aux fréquences de modulation précitées, ces deux voies comprenant chacune un double circuit (48) de passage hétérodyne à une fréquence intermédiaire et un double circuit numérique (50) de comptage d'impulsions, les sorties de ces deux voies étant reliées aux entrées d'un circuit de calcul (52).

6. Télémètre selon l'une des revendications précédentes, caractérisé en ce que le circuit de calcul (52) comprend des moyens de décalage de bits (R2), de complément à 2 (I1) et d'addition (A1) pour obtenir la distance D à partir des déphasages à la fréquence faible et à la fréquence élevée de modulation, ainsi que des moyens (A2) de minimisation de l'influence du bruit sur le déphasage à la fréquence élevée et des moyens de correction du déphasage résultant de l'amplification du signal de sortie du photorécepteur (20).

7. Télémètre selon l'une des revendications précédentes, caractérisé en ce qu'il comprend une seule diode laser (10) et des moyens de commande

de et d'alimentation de cette diode permettant de moduler l'intensité du faisceau émis (14) simultanément aux deux fréquences précitées, la modulation à la fréquence la plus faible servant de porteuse à la modulation à la fréquence la plus élevée.

8. Télémètre selon l'une des revendications 1 à 6, caractérisé en ce qu'il comprend deux diodes laser (10, 10') émettant chacune un faisceau lumineux, des moyens de modulation d'un de ces faisceaux à l'une des fréquences précitées, des moyens de modulation de l'autre de ces faisceaux à l'autre fréquence précitée et des moyens (60, 62) de multiplexage optique par polarisation des deux faisceaux modulés.

9. Télémètre selon l'une des revendications précédentes, caractérisé en ce que le photorécepteur (20) recevant le flux rétrodiffusé par la cible est à petite surface sensible dont l'aire correspond sensiblement à celle de la tache formée par le flux rétrodiffusé quand la cible est sensiblement à la distance maximale de mesure.

10. Télémètre selon l'une des revendications précédentes, caractérisé en ce qu'il comprend des moyens (64) de déviation angulaire périodique du faisceau émis, permettant un balayage par lignes d'un champ d'observation, ces moyens comprenant par exemple des miroirs pivotants à commande galvanométrique programmable asservie et pilotée.

11. Télémètre selon la revendication 10, caractérisé en ce que le flux rétrodiffusé par la cible est capté par les moyens (64) de déviation angulaire pour être transmis à un photorécepteur (20).

12. Télémètre selon la revendication 10 ou 11, caractérisé en ce qu'il comprend une pluralité de fibres optiques (70) dont les premières extrémités sont situées dans le champ d'observation précité au voisinage des moyens (64) de déviation angulaire, et dont les secondes extrémités ont des orientations et une répartition prédéterminées par rapport au télémètre.

13. Télémètre selon la revendication 12, caractérisé en ce que les premières extrémités des fibres optiques sont disposées le long d'une ligne (72) de balayage.

14. Télémètre selon l'une des revendications 10 à 13, caractérisé en ce qu'il est embarqué dans un engin mobile (76) tel qu'un véhicule ou un robot.

15. Télémètre selon l'une des revendications 10 à 14, caractérisé en ce qu'il comprend des moyens programmés de commande des moyens (64) de déviation angulaire, permettant en particulier de déterminer les dimensions du champ d'observation et le nombre de lignes de balayage (72).

16. Télémètre selon l'une des revendications 10 à 15, caractérisé en ce qu'il comprend des moyens de contrôle dynamique des gains des moyens de traitement du flux rétrodiffusé, permettant en particulier d'éviter les saturations.

17. Télémètre selon l'une des revendications 10 à 16, caractérisé en ce qu'il est utilisé sans la source lumineuse précitée pour l'obtention d'une image "passive" du champ d'observation.

18. Télémètre selon l'une des revendications 10 à 17, caractérisé en ce qu'il comprend également des moyens de traitement des signaux de sortie du photorécepteur, reliés à des moyens de visualisation pour l'obtention d'une image des réflectances des points de la zone observée.

19. Télémètre selon l'une des revendications 1 à 18, caractérisé en ce que les moyens de réception du flux lumineux rétrodiffusé comprennent une barrette de photodétecteurs, tels par exemple que des photodiodes à avalanche.

20. Télémètre selon la revendication 19, caractérisé en ce que l'ensemble source lumineuse (10) - barrette (20) de photodétecteurs - moyens (64, 68) de déviation angulaire du faisceau émis est monté à rotation autour d'un axe par exemple vertical et est associé à des moyens motorisés d'entraînement en rotation autour de cet axe.

FIG.1

FIG.2a

FIG.2b

FIG.3a

FIG.3b

FIG.4

FIG.5

FIG.6

EP 0 629 880 A1

FIG.4a

FIG.7

FIG.8

Office européen
des brevets

**RAPPORT DE RECHERCHE EUROPEENNE**

Numero de la demande

EP 94 40 1292

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | INSTRUMENTS AND CONTROL SYSTEMS, vol.44, no.4, Avril 1971, RADNOR US pages 117 - 118 VIGNERI 'Dual-Frequency Laser Ranging' * page 117, colonne de gauche, ligne 8 - page 118, colonne de droite, ligne 31; figures 1,2 * | 1-3,7 | G01S17/36 |
| A | GLASTECHNISCHE BERICHTE, vol.54, no.6, Juin 1981, FRANKFURT DE pages 149 - 156 VOSS ET AL 'Messung des Verschleissprofils in der Spülkante von Glasschmelzwannen mit Hilfe eines lasertechnischen Verfahrens' * page 151, colonne de gauche, ligne 22 - page 152, colonne de gauche, ligne 10; figure 2 * | 1-3,7 | |
| A | GB-A-2 241 399 (OPTICAL METROLOGY LIMITED) * abrégé; figure 3 * | 4,5 | |
| A | EP-A-0 428 027 (FIRMA CARL ZEISS) * abrégé; figure 1 * | 8 | DOMAINES TECHNIQUES RECHERCHES (Int.Cl.5)<br><br>G01S |
| A | EP-A-0 035 755 (TOKYO KOGAKU KIKAI KABUSHIKI KAISHA) * abrégé; figure * | 1 | |

Le présent rapport a été établi pour toutes les revendications

| Lieu de la recherche | Date d'achèvement de la recherche | Examinateur |
|---|---|---|
| LA HAYE | 12 Septembre 1994 | Haffner, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)